## Europäisches Patentamt

## European Patent Office

## Office européen des brevets

(19)

(11) Veröffentlichungsnummer: **0 201 818**
**B1**

(12) **EUROPÄISCHE PATENTSCHRIFT**

(45) Veröffentlichungstag der Patentschrift:
**05.04.89**

(51) Int. Cl.⁴: **A47J 37/08**

(21) Anmeldenummer: **86106050.7**

(22) Anmeldetag: **02.05.86**

(54) **Elektrischer Brotröster.**

(30) Priorität: **08.05.85 DE 3516553**

(43) Veröffentlichungstag der Anmeldung:
**20.11.86 Patentblatt 86/47**

(45) Bekanntmachung des Hinweises auf die Patenterteilung:
**05.04.89 Patentblatt 89/14**

(84) Benannte Vertragsstaaten:
**AT CH DE FR GB IT LI NL SE**

(56) Entgegenhaltungen:
**DE-A- 2 554 876**
**DE-A- 2 745 218**
**DE-A- 3 106 719**
**FR-A- 2 305 138**
**US-A- 4 396 825**

(73) Patentinhaber: **Braun Aktiengesellschaft,
Rüsselsheimer Strasse 22, D-6000 Frankfurt/Main(DE)**

(72) Erfinder: **Möthrath, Georg, Herzbergstrasse 55,
D-6466 Gründau 1(DE)**

(74) Vertreter: **Einsele, Rolf, Braun Aktiengesellschaft
Postfach 1120 Frankfurter Strasse 145, D-6242 Kronberg
Taunus(DE)**

**Beschreibung**

Die Erfindung betrifft einen elektrischen Brotröster gemäß dem Oberbegriff des Patentanspruchs 1.

Aus der DE-AI 3 106 719 ist ein elektrischer Brotröster bekannt, dessen äußere Wände des Gehäuses doppelwandig ausgebildet sind. Die äußeren Wände bilden einen Strömungskanal für einen Luftstrom, der an einer am Boden ausgebildeten Eintrittsöffnung eintritt und über eine Austrittsöffnung an der Gehäuseoberseite austritt. Der Luftstrom kommt hierbei durch die Erwärmung der Wände in Bewegung und strömt nach oben. Da fortlaufend kältere Frischluft nachströmt, werden die äußeren Gehäusewände gekühlt. Bei einer anderen Bauart (DE-AI 2 745 218) wird die Kühlwirkung zusätzlich durch im Strömungskanal angeordnete Rippen verstärkt.

Es hat sich gezeigt, daß nach mehreren aufeinanderfolgenden Röstvorgängen die Kühlwirkung nicht mehr ausreicht, die äußeren Gehäusewände auf einer niedrigen Temperatur zu halten. Besonders der obere Bereich des Gehäuses wird hierbei nur wenig gekühlt.

Ein weiterer elektrischer Brotröster mit einem doppelwandigen Gehäuse ist aus der DD-PS 75 356 bekannt. Der elektrische Brotröster aus der DD-PS 75 356 weist die gleichen zuvor beschriebenen Nachteile wie der Brotröster aus der DE-AI 3 106 719 auf.

Ferner ist ein elektrischer Brotröster aus der DE-U 1 852 571 bekannt, an dessen Fuß Kühlbleche ausgebildet sind. Die Kühlbleche werden durch den einströmenden Luftstrom gekühlt, wodurch der Fuß des elektrischen Brotrösters auf einer niedrigen Temperatur gehalten wird. Die äußeren Gehäusewände des bekannten Brotrösters werden jedoch nicht gekühlt.

Es ist deshalb Aufgabe der Erfindung, einen elektrischen Brotröster zu schaffen, dessen äußere Wände auch nach mehreren aufeinanderfolgenden Röstvorgängen über die gesamte Gehäusehöhe ausreichend kühl bleiben.

Diese Aufgabe wird gemäß der Erfindung durch die im Kennzeichen des Patentanspruchs 1 aufgeführten Merkmale gelöst.

Damit wird ein elektrischer Brotröster geschaffen, dessen aus mehreren Wandelementen bestehende Längswände einen mäanderförmigen Strömungskanal bilden, dessen einzelne Abschnitte entlang der Höhe der Längswände auf und ab verlaufen. Die Wendebögen des Strömungskanals liegen dabei im Oberwand- und Bodenbereich des Gehäuses. Da die der Röstkammer näherliegenden Wandelemente des mäanderförmigen Strömungskanals – im nachfolgenden nur noch mit Strömungskanal bezeichnet – stärker erwärmt werden als die äußeren Wandelemente, strömt fortlaufend ein Luftstrom durch den Strömungskanal. Dieser Luftstrom kühlt die Wandelemente der Längswände durch Konvektion und erwärmt sich mit seinem weiteren Einströmen in dem Strömungskanal. Da der Strömungskanal gemäß der Erfindung wesentlich länger ist als beim Stand der Technik, steht dem Luftstrom wesentlich mehr Zeit zur Verfügung, die Wärme von den äußeren Wandelementen aufzunehmen. Durch geeignete Wahl der Länge, Breite und Tiefe des Strömungskanals, die an die Heizleistung der Heizelemente angepaßt sind, ergibt sich ein kontinuierlicher Luftstrom, dessen Kühlwirkung ausreicht, das äußerste Wandelement der Längswände auch bei Dauerbetrieb der Heizelemente auf einer Temperatur zu halten, die ein Berühren der Längswände ungefährlich macht. Zusätzlich ergibt sich durch den langen Strömungskanal der Vorteil, daß die gesamte Längswand auch an der obersten Kante auf einer niedrigen Temperatur gehalten wird. Die Oberwand des Brotröster wird hierbei in vorteilhafter Weise durch die oberen Wendebögen gekühlt. Die unteren Wendebögen kühlen den Bodenbereich.

Gemäß einer ersten vorteilhaften Weiterbildung der Erfindung (Anspruch 2) mündet die Luftaustrittsöffnung des Strömungskanals in die Röstkammer. Die dort von den Heizelementen abgegebene Strahlungswärme erwärmt den Luftstrom, der schnell nach oben steigt und Kaltluft durch die Lufteintrittsöffnung des Strömungskanals nachzieht. Damit ergibt sich gegenüber den bekannten Brotröstern, bei denen kühle Außenluft an der Seite der Ein- bzw. Ausgabeöffnung für das Brot einfließt, bis zum Boden fällt und dort erhitzt wird, ein Vorteil. Während bei den bekannten Brotröstern durch die genannten Strömungsverhältnisse der untere Bereich des Röstgutes auskühlt und dieses nach dem Röstvorgang dort meist heller ist als am oberen Rand, wird der vorzugsweise unten in die Röstkammer (Anspruch 14) eintretende und hier durch die Kühlung der Wandelemente der Längswände schon stark erwärmte Luftstrom zum Röstvorgang mit herangezogen, indem er auf dem unteren Bereich des Röstgutes einwirkt und hier den Röstvorgang durch Trocknung des Röstgutes unterstützt. Neben dem Vorteil der fortlaufenden Kühlung wird also der Zusatznutzen erzielt, daß die von den einzelnen Wandelementen der Längswände an den Luftstrom abgegebene Wärmeenergie für den Röstvorgang nicht verloren geht und damit der Wirkungsgrad des Brotrösters erhöht wird.

Gemäß einer Weiterbildung der Erfindung wird der Querschnitt des Strömungskanals längs seines Verlaufs vergrößert. Hierdurch wird erreicht, daß sich auch bei einer durch die Erwärmung hervorgerufenen Vergrößerung des Luftvolumens über den gesamten Strömungsweg eine konstante Strömungsgeschwindigkeit ausbildet. Die Veränderung des Strömungskanalquerschnitts läßt sich in einfacher Weise dadurch erreichen, daß der Abstand einer Zwischenwand zu ihren beiden benachbarten Trennwänden unterschiedlich groß gewählt wird (Anspruch 5).

Nach einer anderen Weiterbildung (Anspruch 16) sind in dem Strömungskanal Kühlrippen in Strömungsrichtung angeordnet, die die Oberfläche der Wände vergrößern und damit die Kühlwirkung erhöhen. Zusätzlich tragen die Kühlrippen zur besseren Festigkeit der einzelnen Wände bei.

Weitere vorteilhafte Ausgestaltungen der Erfindung sind den übrigen abhängigen Ansprüchen zu entnehmen.

Nachfolgend wird die Erfindung anhand der Zeichnung näher beschrieben. Es zeigen:

Fig. 1 eine perspektivische Ansicht eines bekannten elektrischen Brotrösters;

Fig. 2 einen Schnitt durch den Brotröster aus Fig. 1 entlang der Schnittlinie A–A, mit Vorrichtungen zum Kühlen der Gehäuseaußenwände analog dem Stand der Technik;

Fig. 3 einen Schnitt durch einen Brotröster nach der Erfindung;

Fig. 4 Einrichtungen zum Verhindern von Luftwirbeln in einem Strömungskanal;

Fig. 5 einen aufgeschnittenen Abschnitt einer Seitenansicht des erfindungsgemäßen Brotrösters;

Fig. 6 einen Schnitt durch einen Brotröster nach einem weiteren Ausführungsbeispiel nach der Erfindung und

Fig. 7 einen Schnitt durch Kühlrippen entlang der Schnittlinie B–B in Fig. 5.

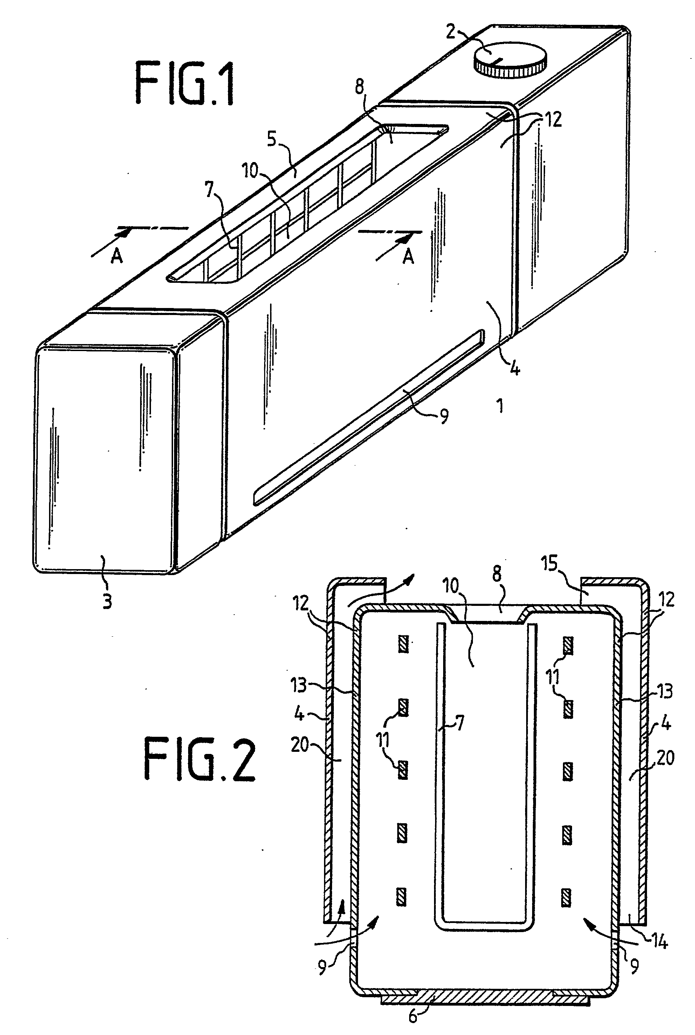

In Fig. 1 ist ein bekannter elektrischer Brotröster 1 mit einer Röstkammer 10 gezeigt. Der Brotröster 1 weist Seitenwände 3, Längswände 4, eine Oberwand 5 und einen nicht zu erkennenden Boden 6 auf. Mit einem Stellknopf 2 wird die Röstzeit eingestellt. An der Oberwand 5 ist eine Ein- und Ausgabeöffnung 8 für das Röstgut in die Röstkammer 10 vorgesehen. In der Röstkammer 10 sind Schnutzgitter 7 vor nicht dargestellten Heizelementen 11 angeordnet. Die Längswände 4 weisen eine Luftansaugöffnung 9 auf, über die der Röstkammer 10 Frischluft zugeführt wird.

Mit dem Einschalten des Brotrösters 1 werden normalerweise besonders die Längswände 4 des Gehäuses 12 stark erwärmt. Es wurde deshalb versucht, insbesondere die Längswände 4 mit einfachen Mitteln zu kühlen. Fig. 2 zeigt einen Schnitt längs der Linie A–A durch den Brotröster 1 aus Fig. 1, der zusätzliche Vorrichtungen zum Kühlen der Außenwände des Gehäuses 12 aufweist.

Bei den Vorrichtungen zum Kühlen handelt es sich um eine doppelte Wandung des Gehäuses 12, wobei auf die ursprüngliche Außenwand eine zusätzliche Wand angesetzt ist, die nunmehr als Trennwand 4 die äußerste Gehäusewand bildet. Durch die doppelte Wandung des Gehäuses 12 wird ein Strömungskanal 20 ausgebildet, in den über eine Lufteintrittsöffnung 14 kalte Luft einströmt. Die Luft erwärmt sich besonders an der inneren Wand – nachfolgend mit Trennwand 13 bezeichnet – und steigt in dem Strömungskanal 20 nach oben zu einer Luftaustrittsöffnung 15. Mit dem Entlangstreichen an den Trennwänden 4 und 13 wird die Wärme von den Außenwänden des Gehäuses abtransportiert und mehr ein Isoliereffekt als ein Kühleffekt erreicht. Jedoch nach mehreren aufeinanderfolgenden Röstvorgängen erwärmt sich auch die Trennwand 4 stark. Besonders der obere Gehäusebereich erfährt keine ausreichende Kühlung, da hier für den schon erwärmten Luftstrom zu wenig Zeit verbleibt, weitere Wärmeenergie aufzunehmen. Ferner strömt die erwärmte bzw. erhitzte Luft in nachteiliger Weise direkt in den Griffbereich des Brotrösters.

Auch wenn in Fig. 1 ein Brotröster 1 mit einer Röstkammer 10 dargestellt ist, bezieht sich die nachfolgend beschriebene Erfindung auch auf andere Bauformen von elektrischen Brotröster, z.B. mit zwei Röstkammern 10. Ebenso beschränkt sich die Erfindung nicht nur auf die zur Erläuterung nachfolgend angeführten Längswände 4 des Gehäuses, sondern ist an allen Außenwänden des Gehäuses anwendbar.

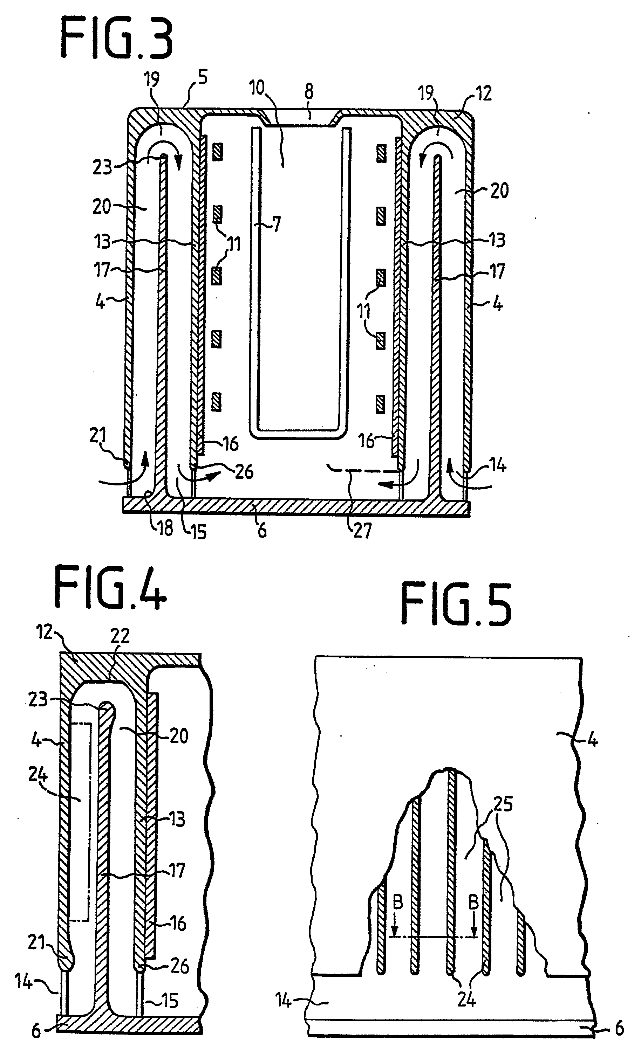

Fig. 3 zeigt einen elektrischen Brotröster 1 nach der Erfindung im Schnitt. Nach der Erfindung weist der Strömungskanal 20 durch geeignetes Ausbilden von Trennwänden 4, 13 und Zwischenwänden 17 einen mäanderförmigen Verlauf auf. In Fig. 3 ist der mäanderförmige Verlauf auf einen U-förmigen Abschnitt beschränkt, der aus zwei Windungshälften besteht. Je nach Anwendungsfall können mehr als die gezeigten Auf- und Abwindungen vorgesehen sein. Es hat sich gezeigt, daß in den meisten Anwendungsfällen der in Fig. 3 gezeigte U-förmige Abschnitt des Strömungskanals 20 ausreicht, die äußeren Wände des Gehäuses zu kühlen. Vorzugsweise sind die Lufteintritts- und -austrittsöffnungen 14, 15 im Bereich des Bodens 6 ausgebildet, wobei die Luftaustrittsöffnung 15 in erfinderischer Weise in die Röstkammer 10 mündet. Es sind aber auch Ausführungsbeispiele möglich, in denen die Lufteintritts- und -austrittsöffnung im oberen Gehäusebereich angeordnet sind. Ebenso kann die Lufteintrittsöffnung 14 oben und die Luftaustrittsöffnung 15 unten – oder umgekehrt – ausgebildet sein. In diesem Fall schließt eine weitere halbe Windung an dem in Fig. 3 gezeigten Strömungskanal 20 an. Liegt die Lufteintrittsöffnung 14 im Bereich des Bodens 6, ergibt sich der Vorteil, daß kein Staub in den Strömungskanal 20 fallen und sich im unteren Wendebogen 19 ansammeln kann. Gegebenenfalls ist es möglich, die Lufteintrittsöffnung 14 mit einem luftdurchlässigen Schutzgitter abzudecken. In Fig. 3 sind die mäanderförmigen Strömungsabschnitte 20 auf beiden Seiten des Gehäuses 12 des Brotrösters 1 ausgebildet. Vorzugsweise erstreckt sich der Strömungskanal 20 in der Breite über die gesamte Länge der Längswand 4. An den Rändern ist der Strömungskanal 20 beispielsweise durch die Seitenwände 3 abgeschlossen. Andererseits ist es möglich, den Strömungskanal 20 an allen senkrechten Gehäusewänden 3, 4 auszubilden. Der Strömungskanal 20 muß hierbei nicht durch Seitenwände abgeschlossen sein, sondern kann einen geschlossenen Ring um die Röstkammer 10 bilden. Die einzelnen Abschnitte des Strömungskanals 20 bilden dann in einem Schnitt parallel zum Boden 6 in der Draufsicht konzentrische Ringe, die die Röstkammer 10 umlaufen.

Wird der Brotröster 1 in Betrieb gesetzt, erwärmen die Heizelemente 11 nicht nur die Röstkammer 10, sondern allmählich werden auch die Trennwände 13 erhitzt. Weiter ist ein in Fig. 2 nicht gezeigter Reflektor 16 vorgesehen, der die Strahlungswärme zur Röstkammer 10 hin reflektiert. Mit dem Erwärmen des Brotrösters 1 entsteht ein Unterdruck an der Luftaustrittsöffnung 15 bzw. in der Röstkammer 10 und dem Strömungskanalabschnitt, den die Trennwand 13 und die Zwischenwand 17 bilden. Dieser Unterdruck bewirkt, daß ein kalter Luftstrom an der Lufteintrittsöffnung 14 eingesaugt wird und in dem kälteren Strömungskanalabschnitt zuerst aufwärts steigt. Hierbei strömt die kältere Luft, die sich auf Raumtemperatur befindet, fortlaufend nach. Nach dem Durchlauf des Wendebogens 19 strömt der Luftstrom nach unten bis zur Luftaustrittsöffnung 15 und gelangt vorzugsweise in die Röstkammer 10. Wie in Fig. 3 an der rechten Gehäuseseite mit dem Bezugszeichen 27 angedeutet, kann die Luftaustrittsöffnung 15 soweit in den Innenraum ragen, daß der Luftstrom erst an einer geeigneten Stelle zwischen den Heizelementen 11 und der Röstkammer 10 nach oben steigt. Da der Luftstrom an der Ein- und Ausgabeöffnung 8 für das Röstgut austritt, ergibt sich ein kontinuierlicher Luftstrom von der Lufteintrittsöffnung 14 bis zu der Ein- und Ausgabeöffnung 8. Der Luftstrom nimmt während des Verlaufs in dem Strömungskanal 20 die von den Wänden abgegebene Wärmeenergie auf und transportiert sie zurück zur Röstkammer 10. Infolge des langen Strömungsweges besteht ausreichend Zeit zur Übertragung der Wärmeenergie von den Wänden auf den Luftstrom. Der Querschnitt des Strömungskanals 20 und die Größe der Luftein- und Luftaustrittsöffnungen 14, 15 ist auf die Strömungsverhältnisse des Röstraumes und den durch die Erwärmung erzeugten Unterdruck abgestimmt.

Alle Ecken 26 und Stoßkanten 18 an den Wänden, die den Strömungskanal 20 bilden, sind wie in Fig. 4 gezeigt in geeigneter Weise gerundet, damit sich ein wirbelfreier Luftstrom mit konstanter Strömungsgeschwindigkeit ergibt. An besonders kritischen Stellen, an denen Wirbel auftreten können, sind zusätzliche Einrichtungen vorgesehen, die einen ungestörten Strömungsverlauf unterstützen. So sind beispielsweise die Wendebögen 19 im Querschnitt halbkreisförmig und gegebenenfalls durch Abflachungen, die den Strömungsquerschnitt einengen, an einen wirbelfreien Strömungsverlauf angepaßt. Zusätzlich ist es möglich, an den freien Enden und Kanten der Wände, die Wirbel erzeugen, tropfenförmige Verdickungen 21, 23 vorzusehen, die eine abrißfreie und wirbelfreie Strömung begünstigen. Vorzugsweise liegen die Verdickungen 21, 23 in Strömungsrichtung gesehen nach der wirbelerzeugenden Kante. Abhängig vom Anwendungsfall sind andere strömungsbegünstigende Einrichtungen als die gezeigten anwendbar.

Zur Erhöhung der Kühlwirkung ist es möglich, Vorrichtungen in dem Strömungskanal 20 vorzusehen, die die Oberfläche der von dem Luftstrom beaufschlagten Wandseiten vergrößern. Die Vorrichtungen sollten dabei den Strömungsverlauf wenig behindern und vorzugsweise werden Kühlrippen 24 verwendet, die in Strömungsrichtung ausgerichtet sind. Fig. 5 zeigt an einem Aufriß der Trennwand 4 in der Seitenansicht eines Brotrösters 1 derartige Kühlrippen 24.

In Fig. 4 sind die Kühlrippen 24 gestrichelt angedeutet. Die Kühlrippen bilden schmale Kühlkanäle 25, die gleichzeitig einen geordneten Strömungsverlauf in dem breiten Strömungskanal 20 bewirken, der z.B. über die gesamte Gehäuselänge ausgebildet ist. Vorzugsweise sind die Kühlrippen 24 an den Wänden mit dem größten Wärmepotential ausgebildet. Gegebenenfalls ist es möglich, die Innenwände des Strömungskanals 20 samt den Kühlrippen 24 zu schwärzen bzw. zu verspiegeln. Hierzu sind die zu der Röstkammer 10 gerichteten Wände vorzugsweise verspiegelt, um die Aufheizung durch Wärmestrahlung von der Röstkammer 10 her zu vermindern. Andererseits sind die nach außen gerichteten Wände vorzugsweise geschwärzt, um die Kühlwirkung in der zuvor beschriebenen Weise durch den Luftstrom zu erhöhen. Jedoch ist die äußerste, außenliegende Gehäusewand nicht zu schwärzen, da der Brotröster durch Sonneneinstrahlung unnötig aufgeheizt werden würde. Die äußerste, außenliegende Gehäusewand des Brotrösters ist daher vorzugsweise in einer hellen, spiegelnden Farbe zu halten. Zusätzlich ergibt sich mit den Kühlrippen 24 der Vorteil, daß sie zur Versteifung der Wände beitragen. Hierbei kann die Zwischenwand 17 die Kühlrippen 24 berühren, wenn die Kühlrippen 24 an den Trennwänden 4, 13 ausgebildet sind.

Wie in Fig. 3 gezeigt, läßt sich der Strömungskanal 20 durch Ineinanderschachteln von Trennwänden 4, 13 und Zwischenwänden 17 bilden. Die Trennwände 4, 13 oder weitere Trennwände sind mit der Oberwand 5 verbunden und erstrecken sich nach unten. Eine entsprechende Anzahl von Zwischenwänden 17 ist an dem Boden 6 befestigt. Die Zwischenwände 17 erstrecken sich nach oben und ragen in den Raum, den die Trennwände 4, 13 aufspannen. Die Zwischenwände 17 unterteilen somit den aufgespannten Raum. Je nachdem, ob die Lufteintritts- und Luftaustrittsöffnungen 14, 15 oben oder unten ausgebildet sein sollen, sind mehr oder weniger Trennwände 4, 13 als Zwischenwände 17 vorgesehen. Die Höhe der Trenn- und Zwischenwände 4, 13, 17 ist so bemessen, daß ein Spalt zu der Ober- oder Bodenwand verbleibt, wodurch in einfacher Weise der Wendebogen 19 ausgebildet wird, von dem der Luftstrom in den nachfolgenden Abschnitt des Strömungskanals 20 gelangt. Der Strömungsverlauf wird nach Durchlaufen eines Abschnitts des Strömungskanals 20 jeweils um 180° in seiner Richtung geändert, wobei der Luftstrom von der Lufteintrittsöffnung 14 bis zur Luftaustrittsöffnung 15 fortschreitet. Vorzugsweise verläuft der Abschnitt des Strömungskanals über die gesamte Höhe des Gehäuses.

Da die erwärmte Luft am Ende des Strömungskanals 20 ein größeres Volumen aufweist als beim Lufteintritt, ist es vorteilhaft, wenn der Querschnitt des Strömungskanals zum Luftaustritt hin vergrößert wird. Dies läßt sich dadurch erreichen, daß die Zwischenwand 17 mehr oder weniger an der kälteren Trennwand steht. In Fig. 4 müßte die Zwischenwand 17 zum Vergrößern des Abströmquerschnittes näher an der Trennwand 4 und weiter entfernt von der Trennwand 13 stehen. Bei mehreren, parallel zueinander angeordneten Trenn- und Zwischenwänden 4, 13, 17 ist es möglich, die einzelnen Zwischenwände 17 stufenweise näher an den kälteren Trennwänden 4 anzuordnen. Hierbei ist in Strömungsrichtung gesehen die warme Trennwand 13, die kältere Trennwand 4 des nachfolgenden Abschnitts des Strömungskanals. Weiter ist es möglich, die Trenn- und Zwischenwände 4, 13, 17 über den Querschnitt unterschiedlich dick auszubilden, um den Abströmungsquerschnitt zu verändern. Ebenso können die Wände an den Anström- und Abströmflächen unterschiedlich gestaltet sein. Wegen des größeren Volumens des erwärmten Luftstromes, kann es auch erforderlich sein, die Luftaustrittsöffnung 15 größer als die Lufteintrittsöffnung 14 zu gestalten.

Nach Fig. 3 und 4 sind die Trenn- und Zwischenwände 4, 13, 17 aus einem Stück mit der zugehörigen Ober- oder Bodenwand 5, 6 gefertigt. Hierbei ist es möglich, die Trennwände 4, 13 zusammen mit der Oberwand gemeinsam aus Kunststoffmaterial zu spritzen. Dies gilt gleichfalls für die Fertigung der Zwischenwände 17 zusammen mit dem Boden 6. Die Trenn- und Zwischenwände 4, 13, 17 können jedoch auch einzeln gefertigt – z. B. aus Blechplatten – mit der zugehörigen Wand befestigt werden. Wie aus Fig. 3 ersichtlich, besteht in diesem Fall die Trennwand 13 aus der Rückwand des Reflektors 16. Je nachdem, ob die Luftaustrittsöffnung 15 oben oder unten ausgebildet ist, bildet die Rückwand des Reflektors 16 oder die Trennwand 13 oder die Zwischenwand 17. Abweichend von dem in Fig. 3 vereinfacht dargestellten Brotröster 1 können geeignete Unterbrechungen und Isolierschichten – nicht dargestellt – vorgesehen sein, die verhindern, daß Wärme aus dem mittleren Boden- oder Oberwandbereich über Wärmeleitung in die äußeren Wände transportiert wird.

Weiter läßt sich der mäanderförmige Strömungskanal 20 aus zwei deckungsgleichen, ebenen Platten fertigen, die einander mit Abstand gegenüberstehen. Seitlich sind die Platten an zwei gegenüberliegenden Rändern verschlossen. Die verbleibenden Öffnungen entsprechen dem Lufteintritts- und Luftaustrittsöffnungen 14, 15. Hierbei läßt sich durch ein nichtparalleles Anordnen der beiden Platten die Luftaustrittsöffnung 15 leicht größer gestalten als die Eintrittsöffnung 14. Durch wellenförmiges Einfalten der beiden Platten an den Punkten, an denen die Wendebögen ausgebildet werden sollen, lassen sich die Wände zu dem mäanderförmigen Strömungskanal umformen. Die Falzlinien verlaufen parallel zu den Öffnungskanten der Luftein- und -austrittsöffnungen 14, 15, wobei die Trenn- und Zwischenwände nach dem Falzen doppelt liegen.

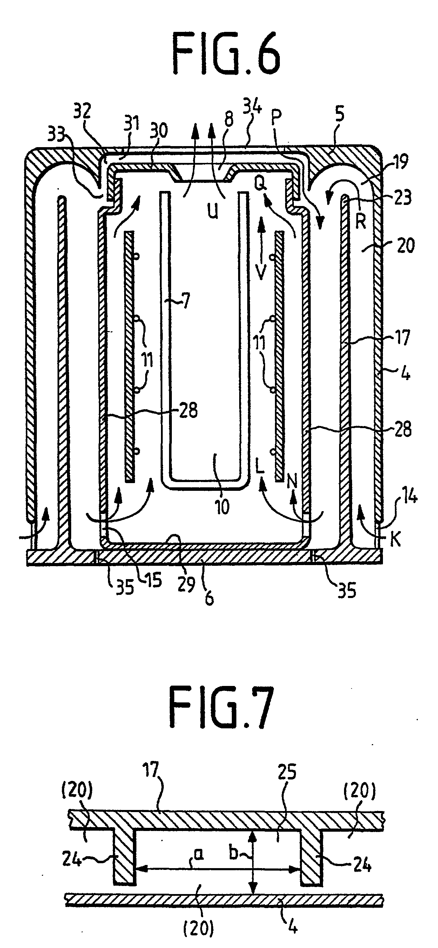

Fig. 6 zeigt ein weiteres Ausführungsbeispiel des Brotrösters nach der Erfindung, bei dem die Trennwand 13 nach dem in Fig. 3 gezeigten Ausführungsbeispiel durch den Reflektor 16 gebildet wird. In Fig. 6 weist der Reflektor bzw. die Trennwand das Bezugszeichen 28 auf, wobei wie in Fig. 6 beispielhaft gezeigt, die beiden Reflektorwände zusammen mit einer Bodenwand 29 aus einem Stück Stahlblech kastenförmig gebogen sind. Wie zuvor beschrieben, sind in dem unteren Gehäusebereich in dem Stahlblech die Luftaustrittsöffnungen 15 vorgesehen, durch die der erwärmte Luftstrom in die Röstkammer 10 mündet. An der Oberseite der Reflektorwände 28 ist ein Abdeckblech 30 mit der zuvor beschriebenen Ein- und Ausgabeöffnung 8 für das Röstgut aufgesetzt. Das Abdeckblech 30 ist wie in Fig. 6 dargestellt, durch Falze mit den Reflektorwänden 28 verbunden oder beispielsweise verschweißt.

Wie in Fig. 6 weiter zu erkennen, weist der äußere Gehäuseaufbau die Trennwand 13 aus Fig. 3 nicht auf, deren Funktion durch die Reflektorwand 28 übernommen wird. Die Reflektorwände 28 sind deshalb so angeordnet, daß sie im wesentlichen die Lage der ursprünglichen Wand 13 einnehmen, wobei in Fig. 6 der einströmende Bereich des Strömungskanals 20 beispielhaft etwas schmäler ausgebildet ist als der abströmende Bereich, da wie zuvor beschrieben das Volumen der erwärmten Luft in dem abströmenden Bereich des Strömungskanals 20 zunimmt. Vorzugsweise beträgt der Abstand zwischen der äußeren Gehäusewand 4 und der Zwischenwand 17 ca. 7 mm und der Abstand zwischen der Wand 17 und dem Reflektor 28 10 mm. Mit dem Fortfall der Trennwand 13 aus Fig. 3 ergibt sich der Vorteil, daß das in Fig. 6 gezeigte haubenförmige, äußere Teil leichter herstellbar ist. Weiter ergibt sich eine Materialeinsparung. Zusätzlich ist das Abdeckblech 30 gegenüber der Oberwand 5 etwas abgesetzt und liegt deshalb tiefer, wodurch sich ein zusätzlicher Berührungsschutz gegen das sich erwärmende Abdeckblech 30 ergibt. Dementsprechend weist die Oberseite 5 des Gehäuses eine Öffnung 34 auf, über die das Röstgut der Ein-/Ausgabeöffnung 8 in dem Abdeckblech 30 zugeführt wird.

Obwohl das Abdeckblech 30 in Fig. 6 parallel zu der Oberwand 5 verläuft, ist es möglich, das Abdeckblech 30 über seine gesamte Breite trichterförmig auszubilden, damit kleinere Teile des Röstgutes, die bei der Ein- oder Ausgabe abfallen, vorzugsweise über die Ein-/Ausgabeöffnung 8 in die Röstkammer 10 gelangen. Die Heizelemente 11 sind in dem in Fig. 6 gezeigten Ausführungsbeispiel auf nicht näher bezeichneten Isolierstoffträgerplatten befestigt, die mit Abstand zu der Innenseite der Reflektorwände 28 angeordnet sind. Die beiden gezeigten Isolierstoffträgerplatten sind hierbei in einer nicht näher dargestellten Weise gelagert, wobei gleichfalls die Heizelemente 11 wie in allen zuvor beschriebenen Ausführungsbeispielen ein anderes Windungsmuster als gezeigt aufweisen können.

Die Reflektoreigenschaften der Reflektorwände 28 werden durch Vernickeln der Stahlblechteile erreicht, wobei alle anderen Metallteile des Brotrösters, die die Röstkammer 10 bilden, vorzugsweise gleichfalls vernickelt sind. Das vernickelte Stahlblech bietet den Vorteil, daß es einen geringen Emmisionswert im Vergleich zu anderen reflektierenden Beschichtungen aufweist. Wegen des geringen Emmisionswertes erwärmen sich die vernickelten Metallteile in einem geringeren Maß.

Wie in Fig. 6 weiter zu erkennen, liegen die äußeren Gehäuseteile 4, 5 des Brotrösters, die durch die erfindungsgemäße Kühlwirkung aus Kunststoffmaterial bestehen können, nicht direkt auf den Metallteilen 28, 29 und 30, die im wesentlichen die Röstkammer bilden auf. Vielmehr ist in dem oberen Gehäusebereich zwischen dem Abdeckblech 30 und der Innenseite der Oberwand 5 ein kleiner Spalt vorgesehen, der einen zusätzlichen Strömungskanal 32 bildet. Da besonders das Abdeckblech 30 wegen der aufsteigenden Wärme erhitzt wird, bietet der Strömungskanal 32 in Form eines Spaltes den Vorteil, daß die Kunststoffteile durch die ständige Hitzezufuhr nicht verformt oder beschädigt werden, was der Fall wäre, wenn die Metallteile – insbesondere das Abdeckblech 30 – die Kunststoffteile berühren würde. Zusätzlich besitzt der Strömungskanal 32 eine Eintrittsöffnung 31 für kältere Luftteile die von außen angesaugt werden, und eine Austrittsöffnung 33, die vorzugsweise im oberen Bereich der Wendebögen 19 in den Strömungskanal 20 mündet. Der Strömungskanal 32 ist damit ringförmig um die gesamte Öffnung 34 bzw. die Eintrittsöffnung 31 umlaufend ausgebildet. Wie nachfolgend anhand der Strömungsverhältnisse erläutert wird, bildet der Spalt, der dem Strömungskanal 32 entspricht eine Dichtung, obwohl der Spalt zwischen den Metall- und den Kunststoffteilen vorhanden ist, der normalerweise keine Dichtwirkung besitzt. Diese vorteilhafte Dichtwirkung ergibt sich aufgrund der Strömungsverhältnisse in dem Strömungskanal 32, wodurch verhindert wird, daß Strömungsanteile des Hauptstromes nach außen gelangen können. Die Eintrittsöffnung 31 kann auch an einer anderen Stelle als in Fig. 6 gezeigt ausgebildet sein. Ebenso weist der Strömungskanal 32 keine Wirbel erzeugende Kanten und Teile auf. Ferner kann der Strömungskanal 32 in einer anderen Richtung als dargestellt verlaufen.

Zur besseren Unterscheidung sind die einzelnen Strömungsbestandteile nachfolgend mit Großbuchstaben bezeichnet. Der an der Lufteintrittsöffnung 14 eintretende Luftstrom K weist Raumtemperatur auf und strömt mit ca. 0,2 m/s in dem aufsteigenden Abschnitt des Strömungskanals 20 und wird in der zuvor beschriebenen Weise erwärmt. In dem oberen Wendebogen 19 hat sich der Luftstrom R schon etwas gegenüber der Raumtemperatur erwärmt und infolge der Strömung entsteht ein gewisser Unterdruck, durch den ein geringer Anteil P über den Strömungskanal 32 eingesaugt wird. Der Strömungsanteil P tritt daher mit Raumtemperatur durch die Öffnung 34 der Oberwand 5 in die Eintrittsöffnung 31 des kleineren Strömungskanals 32 ein und gelangt anschließend über die Austrittsöffnung 33 zu dem Hauptstrom R in dem absteigenden Bereich des Strömungskanals 20. Die kleinere Strömung P wird hier mit der Hauptströmung R vermischt und übt wegen der Raumtemperatur eine Kühlwirkung auf das Abdeckblech 30 besonders im Bereich des Strömungkanals 32 auf die Kanalwände aus. Demzufolge werden die Metallteile und die Kunststoffteile besonders im Bereich des Strömungskanals 32 fortlaufend gekühlt. Hitzebrücken können sich nicht ausbilden.

Hierzu weist der Strömungskanal 32 eine geeignete Breite, d.h., einen geeigneten Abstand zwischen Metall- und Kunststoffteilen auf. Denn an der ca. 250°C heißen Metallwand bildet sich eine sogenannte Temperaturgrenzschicht aus, die sich über mehrere aufeinanderfolgende Röstzyklen in Richtung der kälteren Kunststoffschicht ausdehnt. Deshalb ist die Spaltbreite des Strömungskanals 32 so bemessen, daß die Strömung P beim Ausdehnen der Temperaturgrenzschicht nicht zum Stillstand kommt bzw. soweit eingeschnürt wird, daß die Kühlwirkung zum Erliegen kommt. Die Temperaturgrenzschicht wird durch den Hauptstrom R mit einer geringeren Geschwindigkeit in den Strömungskanal 20 eingezogen als die Strömung P. Die Temperaturgrenzschicht strömt mit ca. 0,01 m/s und die Strömung P mit ca. 0,05 m/s, wobei die Spaltbreite des Strömungskanals 32 vorzugsweise in einem Bereich von 3,5 mm liegt. Der zusätzliche, geringe Strömungsanteil P, der sich beim Eintritt auf Raumtemperatur befindet und damit kälter ist, stellt keinen Nachteil für die zuvorbeschriebenen Abläufe in dem Strömungskanal 20 dar. Vielmehr ergeben sich dadurch zusätzliche Vorteile zu dem zuvor beschriebenen Vorteil, dem Wegfall der Trennwand 13, indem durch die Kühlwirkung wärmeempfindlichere Kunststoffe im Bereich von erhitzten Metallteilen anordnbar sind. Weiter sind keine großen Anforderungen an die Passgenauigkeit der Teile erforderlich, weil der strömungsbildende Spalt 32 vorhanden ist.

Mit dem Eintritt des Strömungsteils durch die Lufteintrittsöffnung 15 in die Röstkammer 10 strömt ein Hauptteil L an den Heizelementen 11 vorbei und bildet an der Oberseite den Strömungsanteil V. Ein geringerer Strömungsanteil N hinterströmt, wie gezeigt, die Isolierstoffträgerplatte, auf der die Heizelemente 11 ausgebildet sind und strömt im oberen Bereich als Anteil Q ab. Die Hinterströmung der Isolierstoffträgerplatte bewirkt, daß sich hier wie im Fall des Strömungskanals 32 kein Hitzestau bzw. eine Hitzebrücke bilden kann. Beim Austritt aus der Luftaustrittsöffnung 15 weist die Strömung eine Strömungsgeschwindigkeit von ca. 0,3 m/s und eine Temperatur von 50° bis 70° auf. Im oberen Bereich der Röstkammer, in dem die Strömung U aus dem Brotröster austritt, liegt die Strömungsgeschwindigkeit bei ca. 0,7 m/s und die Temperatur bei 350°.

Weiter sind keine großen Anforderungen an die Paßgenauigkeit der zusammenzufügenden Teile 5, 30 erforderlich, da Toleranzen über den Spalt 32 ausgleichbar sind. Ebenso können keine Spannungen durch die unterschiedlichen Längenausdehnungskoeffizienten der Teile auftreten, weil sie nicht miteinander verbunden sind. Ferner trägt der Strömungskanal 32 zur Kühlung der Griffbereiche an der Gehäuseoberseite bei.

Ebenso ist es möglich, in dem Bodenbereich zusätzliche Strömungskanäle 35 vorzusehen, die in gleicher Weise wie der Strömungskanal 32 wirken, in dem sie eine Kühlung zwischen dem heißen Bodenblech 29 und dem Kunststoffboden 6 bewirken. Hierzu ist es möglich, das Bodenblech 29 anders als dargestellt mit Abstand au dem Boden 6 z.B. über Stützen anzuordnen. Die Summe aller Strömungsanteile durch die Kanäle 35 ist hierbei kleiner als die Hauptströmung L,N. Bei diesen Strömungskanälen 35 kann es sich z.B. um runde oder längliche Löcher bzw. Durchbrüche handeln.

Diese Strömungskanäle 35 können auch bevorzugt an anderen Stellen in den Boden 6 ausgebildet sein, um bestimmte Bauteile, wie z.B. den Bereich des Netzkabels zu kühlen, das meist im Bodenbereich in den Brotröster eintritt und dort befestigt ist. Die Wirkung der Strömungskanäle 35 besteht neben der Kühlwirkung durch den Luftdurchtritt, darin, daß sie Wärmeleitsperren darstellen und eine Wärmeleitung durch das Material erschweren. Hierzu sind die Strömungskanäle 35 vorzugsweise linienförmig bzw. in Reihe hintereinander um den zu kühlenden Bodenbereich angeordnet. Z.B. liegen die länglichen Durchbrüche mit ihrer Längsachse auf einer gedachten Linie, die auch gekrümmt und mit Kanten verlaufen kann, wobei die Abstände zwischen den Durchbrüchen möglichst klein gehalten sind. Eine Materialbrücke zwischen zwei Durchbrüchen weist damit die Länge des Abstandes zwischen den Durchbrüchen auf. Gegebenenfalls ist es möglich, großflächige Durchbruchfelder anzuordnen, wobei die Durchbrüche vorzugsweise versetzt zueinander liegen.

Fig. 7 zeigt einen Schnitt durch die Kühlrippen 24 entlang der Schnittlinie B–B in Fig. 5. D.h., in Fig. 7 ist ein einzelner Kühlkanal 25 im Qerschnitt dargestellt, wobei die Summe aller Kühlkanäle 25 den gesamten Strömungskanal 20 bildet. Ein Kühlkanal 25 wird durch die Zwischenwand 17, die Trenn- bzw. Längswand 4 und durch zwei Kühlrippen 24 gebildet. Im Querschnitt weist der Kühlkanal 25 eine rechteckige Grundform mit den Maßen a und b auf. Zur Optimierung der Strömungsgeschwindigkeit ist die Länge a des Kühlkanals 25 im Verhältnis zur Breite b ca. dreimal so groß. D.h., die Strecke a beträgt vorzugsweise das 2,5 bis 3,5fache der Strecke b. Sind die Maße des Kühlkanals 25 in diesem Verhältnis ausgebildet, ergibt sich eine Strömungsgeschwindigkeit mit der optimalsten Kühlwirkung für den Brotröster nach der Erfindung. Dieses Verhältnis gilt auch für die Strömungskanäle 32, 35.

Die vorliegende Erfindung läßt sich auf alle anderen Haushaltsgeräte übertragen, deren Außenwände durch innenliegende Heizelemente erwärmt werden und ist somit nicht auf Brotröster beschränkt. Beispielsweise läßt sich die Erfindung zur Kühlung der Außenwände eines Heißluft-Backofens heranziehen. Gegebenenfalls ist es in anderen Anwendungsfällen als in einem Brotröster erforderlich, ein Gebläse vorzusehen, das die Bewegung des Luftstroms in dem Strömungskanal unterstützt.

## Patentansprüche

1. Elektrischer Brotröster (1) mit einer Röstkammer (10), der über eine Ein- und Ausgabeöffnung (8) das Röstgut zugeführt wird, und einem nach oben durch eine Oberwand (5), nach unten durch einen Boden (6) und seitlich durch jeweils zwei Seiten- (3) und Längswände (4) abgeschlossenen Gehäuse, wobei die beiden Längswände aus mehreren voneinander entfernten Wandelementen derart zusammengesetzt sind, daß sie einen Strömungskanal (20) für einen Luftstrom bilden, der über eine Lufteintrittsöffnung (14) in den Strömungskanal (20) eintritt, beim Durchlaufen derselben die Längswände (4) des Gehäuses durch Konvektion kühlt und über eine Luftaustrittsöffnung (15) wieder austritt, dadurch gekennzeichnet, daß die Wandelemente (4, 13, 17) der Längswände einen mäanderförmigen Strömungskanal (20) bilden, dessen Wendebögen (19) eine derartige Krümmung aufweisen, daß ein auf die Oberwand (5) gerichteter Luftstrom in Richtung Boden (6) und ein auf den Boden (6) gerichteter Luftstrom in Richtung Oberwand (5) umgelenkt wird.

2. Brotröster nach Anspruch 1, dadurch gekennzeichnet, daß die Luftaustrittsöffnung (15) in die Röstkammer (10) mündet.

3. Brotröster nach Anspruch 1, dadurch gekennzeichnet, daß die Wandelemente der Längswände (4) des mäanderförmigen Strömungskanals (20) aus vorzugsweise parallel mit Abstand zueinander angeordneten Trennwänden (4, 13), die an der Oberwand (5) des Gehäuses (12) ausgebildet sind und sich nach unten erstrecken, und Zwischenwänden (17) bestehen, wobei eine Zwischenwand (17), die am Boden (6) ausgebildet ist und sich nach oben erstreckt, zwischen zwei Trennwänden (4, 13) angeordnet ist, und die Trenn- und Zwischenwände (4, 13, 17) in ihrer Höhe so bemessen sind, daß an ihren freien Enden (21, 23, 26) ein Spalt zu dem Boden (6) oder der Oberwand (5) ausgebildet wird.

4. Brotröster nach Anspruch 3, dadurch gekennzeichnet, daß der mäanderförmige Strömungskanal (20) aus einem U-förmigen Abschnitt mit zwei Trennwänden (4, 13) und einer Zwischenwand (17) besteht.

5. Brotröster nach Anspruch 3, dadurch gekennzeichnet, daß die Zwischenwände (17) näher an den kälteren Trennwänden (4) angeordnet sind als an den wärmeren Trennwänden (13).

6. Brotröster nach Anspruch 3, dadurch gekennzeichnet, daß die Zwischenwände (17) zusammen mit dem Boden (6) aus einem Stück Kunststoffmaterial gefertigt sind.

7. Brotröster nach Anspruch 3, dadurch gekennzeichnet, daß die Trennwände (4, 13) zusammen mit der Oberwand (5) aus einem Stück Kunststoffmaterial gefertigt sind.

8. Brotröster nach Anspruch 3, dadurch gekennzeichnet, daß die Trennwände (4, 13) des mäanderförmigen Strömungskanals (20) an den Wendebögen (19) wellenförmig eingefaltet sind.

9. Brotröster nach Anspruch 3, dadurch gekennzeichnet, daß die freien Enden (21, 23, 26) der Trenn- und Zwischenwände (4, 13, 17) und die Stoßkanten (18) gerundet sind.

10. Brotröster nach Anspruch 3, dadurch gekennzeichnet, daß die die Röstkammer begrenzende Trennwand (13) bzw. Zwischenwand (17) auf ihrer der Röstkammer (10) zugewandten Seite als Reflektor (16) ausgebildet ist.

11. Brotröster nach Anspruch 1, dadurch gekennzeichnet, daß im Strömungskanal (20) tropfenförmige Verdickungen vorgesehen sind, die an den freien Enden (21, 23, 26) der Trenn- und Zwischenwände (4, 13, 17) auf deren der Röstkammer (10) zugewandten Seite angeordnet sind.

12. Brotröster nach Anspruch 11, dadurch gekennzeichnet, daß im Strömungskanal (20) strömungsverengende Abflachungen (22) vorgesehen sind, die an halbkreisförmigen Wendebögen (19) des mäanderförmigen Strömungskanals (20) ausgebildet sind.

13. Brotröster nach Anspruch 1 oder 2, dadurch gekennzeichnet, daß die Luftaustrittsöffnung (15) größer ist als die Lufteintrittsöffnung (14).

14. Brotröster nach Anspruch 1 oder 2, dadurch gekennzeichnet, daß die Lufteintrittsöffnung (14) und die Luftaustrittsöffnung (15) im Bereich des Bodens (6) ausgebildet sind.

15. Brotröster nach Anspruch 1, dadurch gekennzeichnet, daß die Lufteintrittsöffnung (14) ein luftdurchlässiges Schutzgitter aufweist.

16. Brotröster nach Anspruch 1, dadurch gekennzeichnet, daß im Strömungskanal (20) in Strömungsrichtung ausgerichtete Kühlrippen (24) ausgebildet sind.

17. Brotröster nach Anspruch 1, dadurch gekennzeichnet, daß die mäanderförmigen Strömungskanäle (20) auf ihrer Innenseite geschwärzt sind.

18. Brotröster nach Anspruch 1, dadurch gekennzeichnet, daß neben den Längswänden (4) des Brotrösters (1) auch dessen Seitenwände (3) aus mehreren Wandelementen bestehen, die einen Strömungskanal gemäß dem Kennzeichen des Anspruchs (1) bilden.

19. Brotröster nach Anspruch 18, dadurch gekennzeichnet, daß die in den Seitenwänden (3) und den Längswänden (4) ausgebildeten Strömungskanäle (20) miteinander verbunden sind, so daß die Strömungskanäle (20) des Brotrösters (1) in einem parallel zum Boden (6) verlaufenden Schnitt aus konzentrisch angeordneten Ringen bestehen.

20. Brotröster nach einem der Ansprüche 1 bis 19, dadurch gekennzeichnet, daß in seinem oberen Bereich ein zusätzlicher Strömungskanal (32) ausgebildet ist, dessen Austrittsöffnung (33) in den Strömungskanal (20) mündet und dessen Eintrittsöffnung (31) Luft (P) aus der Umgebung des Gehäuses (12) des Brotrösters (1) ansaugt, die sich Raumtemperatur befindet.

21. Brotröster nach einem der Ansprüche 1 bis 20, dadurch gekennzeichnet, daß in dem Boden (6) des Brotrösters (1) Strömungskanäle (35) in Form von linien- oder feldförmig ausgebildeten Durchbrüchen angebracht sind, deren Austrittsöffnungen in die Strömungskanäle (20) münden.

22. Brotröster nach Anspruch 1, 20 oder 21, dadurch gekennzeichnet, daß die Strömungskanäle (25, 32, 35) ein Seitenlängenverhältnis b/a aufweisen, das im Bereich von 1/(2,5 bis 3,5) liegt.

## Claims

1. An electric bread toaster (1) with a toasting chamber (10) for receiving the article to be toasted through a feed and discharge opening (8), and with a housing closed at its top by a top wall (5), at its bottom by a base (6) and at its sides by a pair of end walls (3) and side walls (4), with the two side walls being composed of several relatively spaced wall elements such as to provide a flow channel (20) for an airstream which enters the flow channel (20) through an air inlet (14), cools the side walls (4) of the housing by convection as it passes through said flow channel, and exits again through an air outlet (15), characterized in that the wall elements (4, 13, 17) of the side walls provide a meandering flow channel (20) whose turns (19) are curved such that an airstream impinging on the top wall (5) is deflected in the direction of the base (6) while an airstream impinging on the base (6) is deflected in the direction of the top wall (5).

2. A bread toaster as claimed in claim 1, characterized in that the air outlet (15) opens into the toasting chamber (10).

3. A bread toaster as claimed in claim 1, characterized in that the wall elements of the side walls (4) of the meandering flow channel (20) are comprised of preferably parallel relatively spaced partition walls (4, 13) formed on the top wall (5) of the housing (12) and extending downwardly, and of intermediate walls (17), with one intermediate wall (17) formed on the base (6) and extending upwardly being arranged between two partition walls (4, 13), and that the height of the partition and intermediate walls (4, 13, 17) is dimensioned such that at their free ends (21, 23, 26) a clearance is provided relative to the base (6) and the top wall (5), respectively.

4. A bread toaster as claimed in claim 3, characterized in that the meandering flow channel (20) is comprised of a U-shaped section incorporating two partition walls (4, 13) and of an intermediate wall (17).

5. A bread toaster as claimed in claim 3, characterized in that the intermediate walls (17) are arranged closer to the cooler partition walls (4) than to the warmer partition walls (13).

6. A bread toaster as claimed in claim 3, characterized in that the intermediate walls (17) are integrally formed with the base (6) from a piece of plastics material.

7. A bread toaster as claimed in claim 3, characterized in that the partition walls (4, 13) are integrally formed with the top wall (5) from a piece of plastics material.

8. A bread toaster as claimed in claim 3, characterized in that the partition walls (4, 13) of the meandering flow channel (20) are folded in waveform at their turns (19).

9. A bread toaster as claimed in claim 3, characterized in that the free ends (21, 23, 26) of the partition and intermediate walls (4, 13, 17) and the impact corners (18) are radiused.

10. A bread toaster as claimed in claim 3, characterized in that the partition wall (13) or intermediate wall (17) bounding the toasting chamber forms a reflector (16) on its side facing the toasting chamber (10).

11. A bread toaster as claimed in claim 1, characterized in that drop-shaped enlargements are provided in the flow channel (20) at the free ends (21, 23, 26) of the partition and intermediate walls (4, 13, 17) on their sides facing the toasting chamber (10).

12. A bread toaster as claimed in claim 11, characterized in that flow-restricting flattened portions (22) are provided in the flow channel (20), said portions being formed on semicircular turns (19) of the meandering flow channel (20).

13. A bread toaster as claimed in claim 1 or claim 2, characterized in that the air outlet (15) is larger than the air inlet (14).

14. A bread toaster as claimed in claim 1 or claim 2, characterized in that the air inlet (14) and the air outlet (15) are provided in the area of the base (6).

15. A bread toaster as claimed in claim 1, characterized in that the air inlet (14) is provided with a guard penetrable by air.

16. A bread toaster as claimed in claim 1, characterized in that cooling ribs (24) extending in the direction of flow are provided in the flow channel (20).

17. A bread toaster as claimed in claim 1, characterized in that the meandering flow channels (20) have their insides blackened.

18. A bread toaster as claimed in claim 1, characterized in that in addition to the side walls (4) of the bread toaster (1) also its end walls (3) are comprised of several wall elements providing a flow channel in accordance with the characterizing part of claim (1).

19. A bread toaster as claimed in claim 18, characterized in that the flow channels (20) provided in the end walls (3) and the side walls (4) are interconnected such that the flow channels (20) of the bread toaster (1) are concentrically arranged rings when viewed in a section parallel to the base (6).

20. A bread toaster as claimed in any one of the claims 1 to 19, characterized in that in its upper area an additional flow channel (32) is formed whose outlet (33) opens into the flow channel (20) and whose inlet (31) draws in air (P), at ambient temperature, which surrounds the housing (12) of the bread toaster (1).

21. A bread toaster as claimed in any one of the claims 1 to 20, characterized in that the base (6) of the bread toaster (1) includes flow channels (35) in the form of passageways arranged in linear or field fashion, their outlets opening into the flow channels (20).

22. A bread toaster as claimed in any one of the claims 1, 20 or 21, characterized in that the flow channels (25, 32, 35) have a width:length ratio b:a in the range of 1 to (2.5 to 3.5).

## Revendications

1. Grille-pain électrique (1) comportant une chambre de grillage (8), à laquelle on amène le produit à griller par une ouverture d'introduction et d'enlèvement (8), ainsi qu'une carrosserie limitée vers le haut par une paroi supérieure (5), vers le bas par un fond (6) et latéralement par respectivement deux parois latérales (3) et longitudinales (4), étant précisé que les deux parois longitudinales sont composées de plusieurs éléments de paroi éloignées l'un de l'autre de façon à former un canal d'écoulement (20) pour un flux d'air qui pénètre dans le canal d'écoulement (20) par une ouverture (14) d'entrée de l'air, qui, en le parcourant, refroidit par convection les parois longitudinales (4) de la carrosserie et sort à nouveau par une ouverture (15) de sortie de l'air, caractérisé en ce que les éléments (4, 13, 17) des parois longitudinales forment un canal d'écoulement (20) en forme de méandre dont les arcs (19) des boucles présentent une courbure telle qu'un flux d'air dirigé sur la paroi supérieure (5) est renvoyé en direction du fond (6) et qu'un flux d'air dirigé sur le fond (6) est renvoyé en direction de la paroi supérieure (5).

2. Grille-pain selon la revendication 1, caractérisé en ce que l'ouverture (15) de sortie de l'air débouche dans la chambre de grillage (10).

3. Grille-pain selon la revendication 1, caractérisé en ce que les éléments des parois longitudinales (4) du canal d'écoulement (20) en forme de méandre sont constituées de parois limitatives (4, 13), qui sont de préférence disposés parallèlement l'une à l'autre et à une certaine distance l'une de l'autre, qui sont formées sur la paroi supérieure (5) de la carrosserie (12) et qui s'étendent vers le bas, et de paroi intermédiaires (17), étant précisé qu'une paroi intermédiaire (17), qui est formée sur le fond (6) et s'étend vers le haut, est disposée entre deux parois limitatives (4, 13) et que les parois limitatives et les parois intermédiaires (4, 13, 17) sont, en hauteur, dimensionnées de façon à ce qu'à leurs extrémités libres (21, 23, 26) se forme un jeu par rapport au fond (6) ou par rapport à la paroi supérieure (5).

4. Grille-pain selon la revendication 3, caractérisé en ce que le canal d'écoulement (20) en forme de méandre est constitué d'une portion en forme de U comportant deux parois limitatives (4, 13) et une paroi intermédiaire (17).

5. Grille-pain selon la revendication 3, caractérisé en ce que les parois intermédiaires (17) sont disposées plus près des parois limitatives plus froides (4) que des parois limitatives plus chaudes (13).

6. Grille-pain selon la revendication 3, caractérisé en ce que les parois intermédiaires (17) sont fabriquées en matériau plastique, d'une pièce avec le fond (6).

7. Grille-pain selon la revendication 3, caractérisé en ce que les parois limitatives (4, 13) sont fabriquées en matériau plastique, d'une pièce avec la paroi supérieure (5).

8. Grille-pain selon la revendication 3, caractérisé en ce que les parois limitatives (4, 13) du canal d'écoulement (20) en forme de méandre sont repliées en forme d'onde à l'endroit des arcs (19) des boucles.

9. Grille-pain selon la revendication 3, caractérisé en ce que les extrémités libres (21, 23, 26) des parois limitatives et des parois intermédiaires (4, 13, 17) et les arêtes de butées (18) sont arrondies.

10. Grille-pain selon la revendication 3, caractérisé en ce que la paroi séparative (13) qui limite la chambre de grillage ou la paroi intermédiaire (17) est conçue comme réflecteur (16) sur sa face orientée vers la chambre de grillage (10).

11. Grille-pain selon la revendication 1, caractérisé en ce que dans le canal d'écoulement (20) sont prévus des renforts en forme de gouttes qui sont disposés aux extrémités libres (21, 23, 26) des parois limitatives et des parois intermédiaires (4, 13, 17), sur leur face orientée vers la chambre de grillage (10).

12. Grille-pain selon la revendication 11, caractérisé en ce que dans le canal d'écoulement (20) sont prévus des méplats (22) qui étranglent l'écoulement et sont formés sur les arcs (19), en forme de demi-cercle, du canal d'écoulement (20) en forme de méandre.

13. Grille-pain selon la revendication 1 ou 2, caractérisé en ce que l'ouverture (15) de sortie de l'air est plus grande que l'ouverture (14) d'entrée de l'air.

14. Grille-pain selon la revendication 1 ou 2, caractérisé en ce que l'ouverture (14) d'entrée de l'air et l'ouverture (15) de sortie de l'air sont prévues au voisinage du fond (6).

15. Grille-pain selon la revendication 1, caractérisé en ce que l'ouverture (14) d'entrée de l'air présente une grille de protection laissant passer l'air.

16. Grille-pain selon la revendication 1, caractérisé en ce que dans le canal d'écoulement (20) sont prévues des nervures de refroidissement (24) dirigées dans la direction de l'écoulement.

17. Grille-pain selon la revendication 1, caractérisé en ce que les canaux d'écoulement (20) en forme de méandre sont noircis sur leur face inférieure.

18. Grille-pain selon la revendication 1, caractérisé en ce qu'en plus des parois longitudinales (4) du grille-pain (1), ses parois latérales (3) sont également constituées de plusieurs éléments de paroi qui forment un canal d'écoulement conforme à la caractéristique de la revendication (1).

19. Grille-pain selon la revendication 18, caractérisé en ce que les canaux d'écoulement (20) prévus dans les parois latérales (3) et dans les parois longitudinales (4) sont réuni l'un à l'autre de façon que les canaux d'écoulement (20) du grille-pain (1) soient, dans une coupe parallèle au fond (6), constitués d'anneaux disposés concentriquement.

20. Grille-pain selon l'une des revendications 1 à 19, caractérisé en ce que dans sa zone supérieure est prévu un canal d'écoulement supplémentaire (32) dont l'ouverture de sortie (33) débouche dans le canal d'écoulement (20) et dont l'ouverture d'entrée (31) aspire l'air (P) qui provient de l'environnement de la carrosserie (12) du grille-pain (1) et qui se trouve à la température ambiante.

21. Grille-pain selon l'une des revendications 1 à 20, caractérisé en ce que dans le fond (6) du grille-pain (1) sont rapportés, sous forme de découpes en lignes ou en zones, des canaux d'écoulement (35) dont les ouvertures de sortie débouchent dans les canaux d'écoulement (20).

22. Grille-pain selon la revendication 1, 20 ou 21, caractérisé en ce que les canaux d'écoulement (25, 32, 35) présentent un rapport largeur-longueur b/a qui se situe sur la plage de 1/(2,5 à 3,5).

# FIG.1

# FIG.2

# FIG.3

# FIG.4

# FIG.5

# FIG.6

# FIG.7